# EUROPÄISCHE PATENTSCHRIFT

(11) **EP 0 626 248 B1**
(45) Veröffentlichungstag und Bekanntmachung des Hinweises auf die Patenterteilung: **20.05.1998**
(21) Anmeldenummer: 94105420.7
(22) Anmeldetag: 08.04.1994
(51) Int. Cl.: B29C 49/48

(54) **Hohlform zur Herstellung von Hohlkörpern mit Handgriffen**
Hollow mould for manufacturing hollow bodies with handles
Moule creux pour la fabrication de corps creuse avec poignées

(30) Priorität: 26.05.1993 AT 1026/93
(43) Veröffentlichungstag der Anmeldung: 30.11.1994
(73) Patentinhaber: FRIES PLANUNGS- UND MARKETINGGESELLSCHAFT m.b.H., 6832 Sulz (AT)
(72) Erfinder: Rhomberg, Thomas, A-6832 Röthis (AT)
(74) Vertreter: Hefel, Herbert, Dipl.-Ing.

(56) Entgegenhaltungen:
- EP-A- 0 346 518
- DE-B- 2 456 723
- PATENT ABSTRACTS OF JAPAN vol. 10, no. 181 (M-492)(2237) 25. Juni 1986 & JP-A-61 029 524 (NIPPON PLAST CO LTD) 10. Februar 1986

## Beschreibung

Die Erfindung bezieht sich auf eine Hohlform zur Herstellung von Hohlkörpern mit Handgriffen aus thermoplastischen Werkstoffen, insbesondere von Behältern im Blasverfahren.

Bekannt ist ein Dreigriffkanister aus geblasenem Kunststoff, der im Spritzgußverfahren hergestellte Griffe aufweist (DE-PS 21 51 913), die aus einem ähnlichen Kunststoff bestehen wie der geblasene Kunststoff. Diese im Spritzgußverfahren hergestellten Griffe liegen an einem Wandbereich des geblasenen Teiles an und sind an diesem Wandteil befestigt. Die Herstellung eines solchen Kanisters ist sehr aufwendig, da er aus zwei nach verschiedenen Verfahren hergestellten Teilen besteht, die darüber hinaus noch in einem getrennten Montagevorgang miteinander verbunden werden müssen.

Um diesem Nachteil zu begegnen, wurde bereits vorgeschlagen, die Blasform so auszubilden, daß während des Blasvorganges solche Griffe angeformt werden können. Ein Vorschlag dieser Art ist in der DE-PS 26 13 689 geoffenbart. Hier ist vorgesehen, daß der Schlauch, aus dem der Behälter im Blasverfahren geformt wird, in seinem den Griffmulden zugeordneten unteren Abschnitt während des Weiterextrudierens ballonförmig aufgebläht, der aufgeblähte Abschnitt axial nach unten zusammengedrückt und dabei zu den Grifftmulden hin ausgebaucht wird und daß danach jede der beiden Ausbauchungen vor dem Schließen der Blasform und der Griff-Formhälften sowie vor dem Blasformen mittels je einer Greifeinrichtung in den Bereich der Griff-Formhälften gezogen wird. Dazu ist vorgesehen, daß zwei in Richtung auf den Formboden der Blasform verschiebbare Führungsstangen und parallel zu diesen, nahe dem Formboden zwei flache Stützstangen jeweils den Schlauch in einem den Griffomen zugeordneten Abschnitt zwischen sich fassend quer zur Längsrichtung des Schlauches in die Blasform einbringbar und nach dem Verschieben der Führungsstangen in Richtung auf den Formboden zum Ausbauchen des Schlauchabschnittes aus der Blasform herausbringbar sind und daß durch die beiden geöfffneten Grifformen hindurch je eine Greifeinrichtung für das Ergreifen der zugeordneten Ausbauchung des Schlauchabschnittes in die Blasform eintauchbar und herausziehbar angeordnet ist. Diese Einrichtung ist außerordentlich aufwendig und trotz dieses Aufwandes kann mit dieser Einrichtung nur jeweils in einem Kantenbereich des Behälters eine Griffmulde mit einem Griff vorgesehen werden.

Eine zumindest apparativ einfachere Einrichtung für einen vergleichbaren Zweck ist in der DE-PS 11 76 829 gezeigt und beschrieben. Auch mit dieser Einrichtung werden Behälter im Blasverfahren erzeugt, wobei am Behälter direkt Handgriffe angeformt werden, solange der Schlauch noch in der Hohlform ist. Hiezu werden aus zwei miteinander eine gemeinsame Kante bildenden Wänden in Bezug auf die Kante einander gegenüberliegende Wandteile im Abstand von der Kante von beiden Seiten aus bis zur gegenseitigen Berührung und Verschweißung miteinander in den Hohlkörper eingestülpt. Aus den eingestülpten Teilen wird gegebenenfalls eine gemeinsame Öffnung ausgeschnitten. Zu diesem Zweck sind mindestens zwei von einer Kante gegeneinander schwenkbar gelagerte, sektorförmige Formteile angeordnet, deren dem Forminneren zugekehrte Begrenzungsfläche jeweils eine der von der Kante ausgehenden Wandfläche des Formnestes zugeordnet sind und jedes der beiden sektorartigen Formteile liegt in der Ausgangslage in der Wandfläche, der es zugeordnet ist, zurückgezogen und bündig mit ihr. Der Nachteil dieser Einrichtung liegt vor allem darin, daß der an den sektorförmigen Formteilen anliegende Schlauch beim Schließen der Formteile über ein zulässiges Maß hinaus gestreckt und gereckt wird, so daß der Behälter im Bereich der Griffmulden außerordentlich geschwächt ist.

Der Vollständigkeit halber sei noch erwähnt, daß es bekannt ist, Hohlformen zur Herstellung von Hohlkörpern im Blasverfahren mehrteilig auszubilden, und zwar in der Art, daß Teile der Hohlform, wenn sie geschlossen ist, gegeneinander bewegt werden können. Die formgebende Höhlungswand der Hohlform besitzt umlaufende Nuten, wobei die einander gegenüberliegenden Wandungen der Nut gegeneinander bewegbaren Teilen der Hohlform angehören. Der in der Hohlform liegende und aufgeblähte, leicht verformbare Schlauch aus Kunststoffmaterial legt sich an die Höhlungswandung an und auch an die die Nut begrenzenden Wandungen. Anschließend werden die die Nut begrenzenden Teile gegeneinandergefahren und dadurch das hier liegende Material verdichtet und dabei an dem herzustellenden geblasenen Hohlkörper ein außenseitig umlaufender Verstärkungsflansch angeformt. Solche Hohlformen zeigen beispielsweise die US-PS 3 050 773 - die DE-AS 11 30 151 und die im wesentlichen gleichlautende FR-PS 1 227 794; die US-PS 4 228 122 und 3 843 005; sowie die US-PS 4 378 328 und die im wesentlichen gleichlautende DE-PS 29 14 938. Hat der Verstärkungsflansch eine hinreichend große radiale Breite, dann können aus ihm Öffnungen ausgestanzt werden, die zum Durchgriff einer menschlichen Hand dienen. Auch kann der diese Öffnung beinhaltende Flansch weggestanzt und weggeschnitten werden, so daß ein Handgriff übrigbleibt. Solche gegenüber dem Hohlkörper vorstehende Handgriffe sind nicht zweckmäßig, da sie das Transportvolumen beschränken und ferner bei an sich rollbaren Hohlkörpern wie Fässer das Abrollen behindern bzw. überhaupt verunmöglichen.

Ausgehend vom eingangs genannten Stand der Technik zielt die Erfindung vor allem darauf ab, eine Hohlform in der Weise auszugestalten, daß sie von ihrem Aufbau her einfacher ist als die bereits bekannten Konstruktionen, daß die Wandstärke des zu gestaltenden Behälters durch die Griffmulden nicht beeinträchtigt wird und daß dank der erfindungsgemäßen Maßnahme die Griffmulde und der damit verbundene Griff praktisch an jeder beliebigen Stelle des zu gestaltenden Behälters vorgesehen werden kann, wobei die Griffmulde und auch der Griff innerhalb der Umfangskontur des Behälters liegen soll, nicht nur um das Transportvolumen des Behälters zu optimieren, sondern auch, wenn es sich um rotationssymmetrische Behälter handelt, um die Rollmöglichkeit der Behälter nicht zu behindern. Erfindungsgemäß gelingt die Lösung dieser Aufgabe durch jene Maßnahmen, die Gegenstand und Inhalt des kennzeichnenden Teiles des Patentanspruches 1 sind. Zweckmäßige Ausführungsformen werden in den Unteransprüchen festgehalten.

Um die Erfindung zu veranschaulichen, wird sie anhand eines Ausführungsbeispieles in der Zeichnung näher erläutert, ohne sie auf dieses gezeigte Ausführungsbeispiel einzuschränken. Es zeigen:

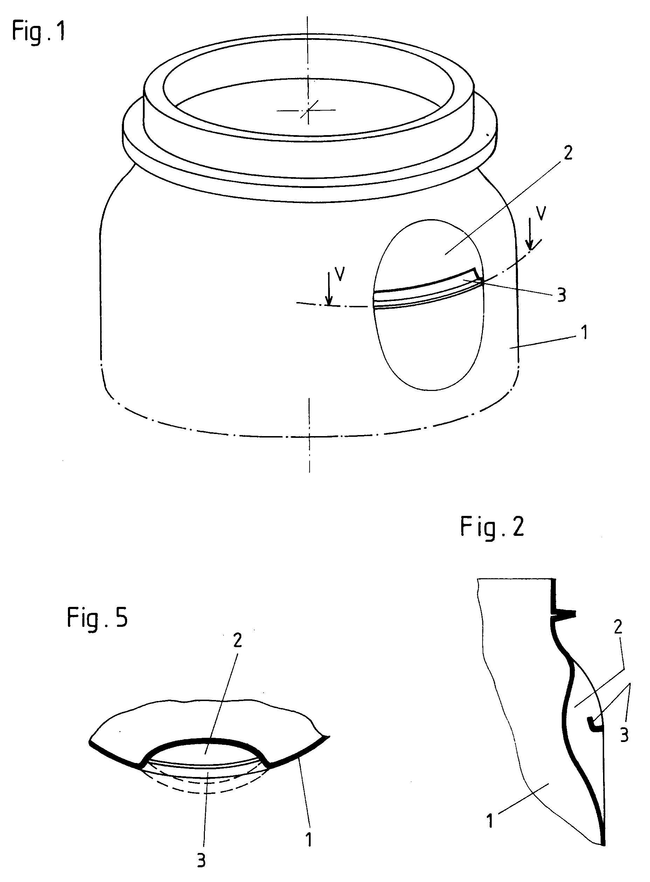

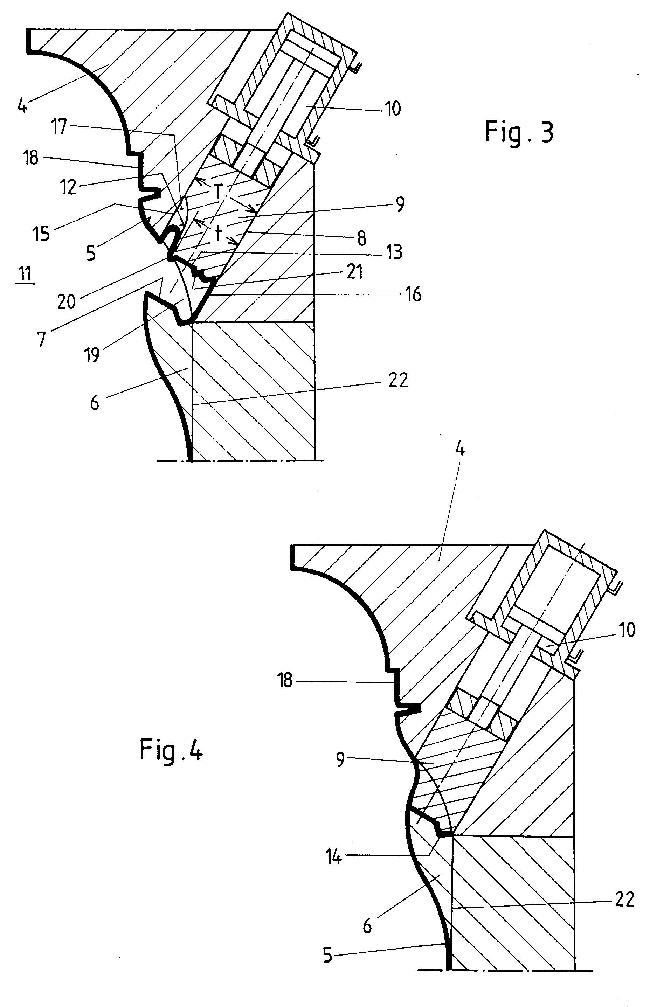

Fig. 1 einen im Hohlkörperblasverfahren gestalteten Behälter in Schrägsicht mit einer seiner angeformten Griffmulden; Fig. 2 einen Teilquerschnitt durch den im Blasverfahren hergestellten Behälter nach Fig. 1, wobei dieser Querschnitt durch die seitlich angeformte Griffmulde geführt ist; die Fig. 3 und 4 einen Querschnitt durch jenen Teil der Blasform, in welchem die Griffmulde mit dem Handgriff geformt wird, und zwar während zweier verschiedener Arbeitsphasen; Fig. 5 einen Horizontalschnitt nach der Linie V-V in Fig.1.

Der Behälter 1, wie in Fig. 1 dargestellt, wird nach dem Hohlkörperblasverfahren gefertigt, wie es für die Herstellung solcher Behälter bevorzugt angewandt wird und hinreichend bekannt ist. In der Seitenwand des Behälters 1, zweckmäßigerweise an einander diametral gegenüberliegenden Stellen ist eine Griffmulde 2 vorgesehen mit einem Handgriff 3. Ein Horizontalschnitt nach der Linie V - V in Fig. 1 unmittelbar oberhalb des Handgriffes 3 ist in Fig. 5 veranschaulicht. Die Griffmulde 2 bzw. deren Wandung bildet einen Teil des Behälters, der Griff 3 verläuft in der Umfangskontur der Wandung des Behälters, so daß er dieser gegenüber nicht vorsteht. Grundsätzlich ist es aber möglich, mit der noch im folgenden zu beschreibenden Einrichtung den Handgriff 3 so zu gestalten, daß er gegenüber der Umfangskontur der ihn enthaltenden Horizontalschnittebene etwas vorkragt, was in Fig. 5 durch eine strichlierte Linie angedeutet ist.

Die Fig. 3 und 4 veranschaulichen nun jenen Teil der Hohl- oder Blasform 4 im Vertikalschnitt, der der Ausformung und Gestaltung der Griffmulde 2 und des Handgriffes 3 dient. Die Wandung 5 der Hohlform 4 ragt an der den zu formenden Handgriffen 3 aufweisenden Stelle balkonartig gegen das Forminnere, die Formhöhlung 11 vor und bildet so einen balkonartigen Vorsprung 6 mit einer Aufstandsfläche 7, die sich quer zur Wandung 5 der Hohlform 4 erstreckt. Oberhalb dieser Aufstandsfläche 7 ist in einer Stempelführung 8 ein Stempel 9 gegen die Aufstandsfläche 7 hin verschiebbar gelagert, dies mittels einer Kolben-Zylinder-Einheit 10. Die der Formhöhlung 11 der Blasform 4 zugewandte seitliche Begrenzungsfläche 12 des Stempels 9 bildet einen Teil der formgebenden Formwand der Formhöhlung 11, wenn der Stempel 9 gegen die Aufstandsfläche 7 vorgefahren ist (Fig. 4). An der der Wandung 5 der Formhöhlung 11 abgewandten Seite sind die Aufstandsfläche 7 bzw. die Stirnseite 13 des Stempels 9 so ausgeformt, daß bei gegen die Aufstandsfläche 7 vorgefahrenem Stempel 9 diese Abschnitte eine rinnenartige Höhlung aussparen und diese rinnenartige Höhlung dient der Ausgestaltung und Ausformung des Handgriffes 3. Die Verschieberichtung des Stempels 9 bzw. dessen Achse ist spitzwinkelig zur Achse der Blasform angeordnet. Bei zurückgezogenem, von der Aufstandsfläche 7 distanziertem Stempel 9 ist der von der Aufstandsfläche 7 und der Stirnfläche 13 des Stempels 9 begrenzte Öffnungsquerschnitt größer als jener Öffnungsquerschnitt, der von der der Formhöhlung 11 benachbart liegenden Wandung 15 der Stempelführung 8 und der der Formhöhlung 11 zugewandten seitlichen Begrenzungsfläche 12 des Stempels 9 begrenzt ist. Das Verhältnis dieser Öffnungsquerschnitte beträgt 1:2 bis 1:3.

Die den balkonartigen Vorsprung 6 bildende, gewölbte Begrenzungswand weist zweckmäßigerweise einen stetigen Verlauf auf, d.h., an jedem Punkt dieser Begrenzungswand ist eine eindeutige Tangentialebene legbar, so daß scharfe Ecken und Kanten vermieden werden. Es ist aus den Fig. 3 und 4 auch erkennbar, daß die Tiefe t der mit der Aufstandsfläche 7 des balkonartigen Vorsprunges 6 zusammenwirkenden Stirnfläche 13 des Stempels 9, die in einer Querebene der Hohlform gemessen ist, kleiner ist als die in derselben Querebene gemessene Tiefe T der Stempelführung 8.

Solche balkonartige Vorsprünge 6 mit Aufstandsflächen 7 und dagegen verschiebbare Stempel 9 können entlang des Umfanges der Hohlform an mehreren Stellen vorgesehen sein, zweckmäßigerweise werden sie an diametralen Stellen der Hohlform angeordnet, die zumindest entlang einer Vertikalebene in herkömmlicher Weise teilbar ist.

Beim betriebsmäßigen Einsatz wird nach dem Schließen der in der Regel zweiteiligen Hohl- oder Blasform der in ihr befindliche vorerst heiße Kunststoffschlauch 18 aufgeblasen, wobei vorerst der Stempel 9 in der aus Fig. 3 ersichtlichen, gegenüber der Aufstandsfläche 7 zurückgezogenen Stellung sich befindet. Durch den innerhalb des heißen Schlauches 18 herrschenden Druck legt sich dieser vorerst leicht verformbare Schlauch an die Wandung der Formhöhlung 11 an, wobei sowohl die Aufstandsfläche 7 und die Stirnfläche 13 des Stempels 9 sowie der Abschnitt 16 der Stempelführung 8 einen Teil der Wandung der Hohlform 11 bilden. Auch die der Formhöhlung 11 benachbarte Wandung 15 der Stempelführung 8 bildet zusammen mit der seitlichen Begrenzungsfläche 12 des Stempels 9 einen Teil der Wandung der Formhöhlung 11, doch da der Querschnitt des durch die letzterwähnten Flächen 12 und 15 gebildeten Hohlraumes 17 relativ klein ist, vermag der heiße Schlauch 18 in diesen Hohlraum 17 nur in beschränktem Umfang einzubringen, wogegen er mühelos in den durch die Flächen 7, 13 und 16 begrenzten Hohlraum 19 gelangt. Das ist in Fig. 3 dargestellt.

Hat sich der heiße Schlauch 18 in der aus Fig. 3 ersichtlichen Weise an die Wandung der Formhöhlung 11 und deren "Nebenhohlräume" 17 und 19 ein- bzw. angelegt, wie aus Fig. 3 ersichtlich, so Fahrt der Stempel 9 gegen die Aufstandsfläche 7 des balkonartigen Vorsprunges 6. Dabei wird durch die rinnenartige Höhlung 14 der Handgriff 3 geformt, der entweder einen massiven, vollen Querschnitt haben kann, wie aus der Zeichnung ersichtlich, oder aber als Rohrstück ausgebildet werden kann. Die Art des Querschnittes des Handgriffes 3 hängt von der Gestaltung der rinnenartigen Höhlung ab, die in beträchtlichem Ausmaß frei wählbar ist.

Die seitliche Begrenzungsfläche 12 des Stempels 9 bildet nun einen Teil der Wandung 5 der Formhöhlung 11 und der zwischen der rinnenartigen Höhlung 14 und der Wandung 15 liegende Teil des Schlauches wird verschweißt und durch Kerbstege 20 und 21 an der Stirnfläche 13 des Stempels werden linienförmige Brechstellen ausgeformt. Entlang dieser Brechlinien wird der verschweißte Teil dann nach der Entnahme des Werkstückes aus der Blasform ausgeschnitten oder ausgebrochen. Der Kerbsteg 20 an der der Formhöhlung 11 zugewandten Seite des Stempels 9 zieht beim Niederfahren des Stempels 9 gegen die Aufstandsfläche 7 den im Hohlraum 17 befindlichen Schlauchteil mit, der sich in der Folge an die Begrenzungsfläche 12 des Stempels 9 anlegt. In den Fig. 3 und 4 veranschaulicht die Linie 22 die äußere Kontur des herzustellenden Behälters und aus dem Verlauf dieser Linie 22 im Vergleich zum balkonartigen Vorsprung 6 ist die Tiefe der hier erzeugten Griffmulde ersichtlich. Dieser balkonartige Vorsprung 6 und der damit zusammenwirkende Stempel 9 können an beliebigen Stellen der Hohl- oder Blasform 4 vorgesehen werden.

Der konstruktive Aufbau der hier beschriebenen Hohl- bzw. Blasform 4 ist im Vergleich zu den vorbekannten Konstruktionen erheblich vereinfacht. Dank des erfindungsgemäßen Vorschlages wird auch der Schlauch im Bereich der Griffmulde und des zu schaffenden Griffes nicht über Gebühr gestreckt und damit geschwächt.

## Patentansprüche

1. Hohlform zur Herstellung von Hohlkörpern mit Handgriffen aus thermoplastischen Werkstoffen, insbesondere von Behältern im Blasverfahren, dadurch gekennzeichnet, daß an der den zu formenden Handgriff aufweisenden Stelle der den Hohlkörper gestaltenden Hohlform (4) die Wandung (5) der Hohlform balkonartig gegen bzw. in die Formhöhlung (11) vortagt und gegen die sich quer bzw. schräg zur Formwand (5) der Hohlform erstreckende Aufstandsfläche (7) des balkonartigen Vorsprunges (6) ein Stempel (9) verschiebbar gelagert ist, dessen der Formhöhlung (11) der Hohlform (4) zugewandte seitliche Begrenzungsfläche (12) bei gegen die Aufstandsfläche (7) gefahrenem Stempel (9) einen Teil der Formwand (5) der Formhöhlung (11) bildet und in der Aufstandsfläche (7) und/oder in der Stirnfläche (13) des Stempels (9) eine den Handgriff (3) formende, sich über die Breite der Aufstandsfläche (7) bzw. der Stirnseite (3) des Stempels (9) erstreckende, rinnenartige Höhlung (14) ausgespart ist.

2. Hohlform nach Anspruch 1, dadurch gekennzeichnet, daß die Verschieberichtung des Stempels (9) bzw. dessen Achse spitzwinkelig zur Achse der Hohlform angeordnet ist.

3. Hohlform nach Anspruch 1 oder 2, dadurch gekennzeichnet, daß bei zurückgezogenem, von der Aufstandsfläche (7) distanziertem Stempel (9) der von der Aufstandsfläche (7) und der Stirnfläche (13) des Stempels (9) begrenzte Öffnungsquerschnitt größer ist als jener Öffnungsquerschnitt, der von der der Formhöhlung (11) benachbart liegenden Wandung (15) der Stempelführung (8) und der Formhöhlung (11) zugewandten seitlichen Begrenzungsfläche (12) des Stempels (9) begrenzt ist.

4. Hohlform nach Anspruch 1, dadurch gekennzeichnet, daß die den balkonartigen Vorsprung (6) bildende, gewölbte Begrenzungswand einen stetigen Verlauf aufweist.

5. Hohlform nach einem der Ansprüche 1 bis 4, dadurch gekennzeichnet, daß die Tiefe (t) der mit der Aufstandsfläche (7) des balkonartigen Vorsprunges (6) zusammenwirkenden Stirnfläche (13) des Stempels (9), die in einer Querebene der Hohlform gemessen ist, kleiner ist als die in derselben Querebene gemessene Tiefe (T) der Stempelführung (8).

6. Hohlform nach Anspruch 3, dadurch gekennzeichnet, daß das Verhältnis der Öffnungsquerschnitte mindestens 1:2 bis 1:3 beträgt.

## Claims

1. A hollow mould for manufacturing hollow bodies with handles from thermoplastic materials, in particular for manufacturing containers using blow moulding, characterised in that at that site of the hollow mould (4) shaping the hollow body at which the handle to be formed is located, the wall (5) of the hollow mould projects balcony-like towards or into the mould cavity (11), and a punch (9) is mounted so as to be displaceable towards the contact surface (7), extending obliquely or at an incline with regard to the mould wall (5) of the hollow mould, of the balcony-like projection (6), the lateral boundary surface (12), facing the mould cavity (11) of the hollow mould (4), of which punch (9) forms part of the mould wall (5) of the mould cavity (11) when the punch (9) is moved against the contact surface (7), and a channel-like cavity (14) which extends over the width of the contact surface (7) or the front end (3 [sic-13]) of the punch (9) and forms the handle (3) is made in the contact surface (7) and/or in the end face (13) of the punch (9).

2. A hollow mould in accordance with Claim 1, characterised in that the displacement direction of the punch (9) or its axis is arranged at an acute angle to the axis of the hollow mould.

3. A hollow mould in accordance with Claim 1 or 2, characterised in that when the punch (9) is withdrawn and located at a distance from the contact surface (7), the opening cross-section bounded by the contact surface (7) and the end face (13) of the punch (9) is greater than that opening cross-section bounded by the wall (15), adjacent to the mould cavity (11), of the punch guide (8) and the lateral boundary surface (12), facing the mould cavity (11), of the punch (9).

4. A hollow mould in accordance with Claim 1, characterised in that the convex boundary wall forming the balcony-like projection (6) has a continuous course.

5. A hollow mould in accordance with any one of Claims 1 to 4, characterised in that the depth (t), measured in a transverse plane of the hollow mould, of the punch end-face (13) co-operating with the contact surface (7) of the balcony-like projection (6) is smaller than the depth (T) of the punch guide (8) measured in the same transverse plane.

6. A hollow mould in accordance with Claim 3, characterised in that the ratio of the opening cross-sections is at least 1:2 to 1:3.

## Revendications

1. Moule creux pour la fabrication de corps creux munis de poignées en matériaux thermoplastiques, en particulier de récipients par un procédé de soufflage, caractérisé en ce que, à l'emplacement, présentant la poignée à former, du moule creux (4) façonnant le corps creux, la paroi (5) du moule creux fait saillie en balcon vers ou dans la cavité de moulage (11) et un plongeur (9) est monté à coulissement vers la surface de contact (7), s'étendant transversalement ou en oblique vis-à-vis de la paroi (5) du moule creux, de la saillie en balcon (6), plongeur dont la surface limite latérale (12) tournée vers la cavité de moulage (11) du moule creux (4) forme, lorsque le plongeur (9) est déplacé contre la surface de contact (7), une partie de la paroi (5) de la cavité de moulage (11), et en ce que, dans la surface de contact (7) et/ou dans la surface frontale (13) du plongeur (9) est ménagée une cavité (14) en forme de rigole s'étendant sur la largeur de la surface de contact (7) ou de la surface frontale (3) du plongeur (9) pour former la poignée (3).

2. Moule creux selon la revendication 1, caractérisée en ce que la direction de déplacement du plongeur (9) ou son axe fait un angle aigu avec l'axe du moule creux.

3. Moule creux selon la revendication 1 ou 2, caractérisé en ce que, lorsque le plongeur (9) est retiré à distance de la surface de contact (7), la section transversale d'ouverture délimitée par la surface de contact (7) et la surface frontale (13) du plongeur (9) est plus grande que la section transversale d'ouverture délimitée par la paroi (15), située au voisinage de la cavité de moulage (11), du guide (8) du plongeur et la surface limite latérale (12), tournée vers la cavité (11) du moule, du plongeur (9).

4. Moule creux selon la revendication 1, caractérisé en ce que la paroi limite bombée formant la saillie en balcon (6) présente un tracé continu.

5. Moule creux selon l'une quelconque des revendications 1 à 4, caractérisé en ce que la profondeur (t) de la surface frontale (13) du plongeur (9) coopérant avec la surface de contact (7) de la saillie en balcon (6), profondeur qui est mesurée dans un plan transversal du moule creux, est plus petite que la profondeur (T) du guide (8) du plongeur mesurée dans le même plan transversal.

6. Moule creux selon la revendication 3, caractérisé en ce que le rapport des sections transversales d'ouverture est d'au moins 1:2 à 1:3.
